# EUROPEAN PATENT SPECIFICATION

(11) **EP 2 224 730 B1**
(45) Date of publication and mention of the grant of the patent: **13.02.2013**
(21) Application number: 09011671.6
(22) Date of filing: 11.09.2009
(51) Int. Cl.: H04N 5/445, G09G 5/373, G09G 5/377, G09G 5/38, G09G 3/20, G06F 3/147

(54) **Display system and display method**
Anzeigesystem und Anzeigeverfahren
Système d'affichage et procédé d'affichage

(30) Priority: 27.02.2009 JP 2009045929
(43) Date of publication of application: 01.09.2010
(73) Proprietor: Kabushiki Kaisha Toshiba, Minato-ku Tokyo (JP)
(72) Inventor: Ida, Tomotaka, Tokyo (JP)
(74) Representative: HOFFMANN EITLE

(56) References cited:
- WO-A1-2007/079988
- DE-U1- 20 315 146
- KR-A- 20080 087 059
- KR-B1- 100 790 063
- US-A1- 2005 162 555
- US-A1- 2005 204 313
- US-A1- 2008 301 993
- "About Screen Calendar" INTERNET CITATION 26 June 2006 (2006-06-26), XP007914144 Retrieved from the Internet: URL:http://web.archive.org/web/20060626024 259/screencalendar.com [retrieved on 2010-07-27]

## Description

### FIELD

The present invention relates to a display system and a display method for displaying a display device as a still image.

### BACKGROUND

In recent years, the number of functions of television (TV) sets has increased. With this increase in the number of functions, for example, a photo viewer function may be provided to the TV set. The photo viewer function is used to view various photo images stored in an external memory such as a portable memory connected to the TV set (for example, see JP-A-11-275503).

A digital photo frame function may be provided to a TV set. The digital photo frame function is used to display as a digital photo frame a favorite photo image registered in advance in the internal memory of the TV set. When plural favorite photo images are stored in the internal memory of the TV set as the registration result, the photo images are sequentially displayed as the digital photo frames.

In addition, when one or more favorite images are registered in the internal memory, the designation of a storage folder for the display image required for the photo viewer function can be omitted and thus the display of the digital photo frame can be rapidly started. When it is set to reproduce favorite music stored in advance in a memory as a BGM when displaying the digital photo frame, the favorite music and the favorite photo image can be simultaneously enjoyed. In the case of muting, the digital photo frame function can be used instead of the sound muting function of muting the sound of a broadcast program in the TV set.

However, when the display of the digital photo frame is delayed, a user is likely to find the display of the digital photo frame tiresome. When the digital photo frame function is considered useless by the user, the usage frequency of the digital photo frame function may be markedly reduced.

US 2005/0162555 A1 is related to a digital photo frame device that may receive TV video signals to play those TV programs. The digital photo frame device of US 2005/0162555 A1 is provided with a video processor for scaling, rotation, and/or positioning processing so that the TV video signals may be appropriately displayed on the display panel.

KR 100 790 063 Bl teaches a method and apparatus for setting time in an image display device, whereby a time information may be acquired from broadcast signals and a NTP server that provides a global time.

### SUMMARY

One of objects of the present invention is to provide a display system and a display method capable of improving the convenience of the function of displaying a still image on a display device such as a digital photo frame.

According to an aspect of the present invention, there is provided a TV set display system comprising: a broadcast signal reception module configured to receive broadcast signals; a remote controller configured to set a still image display mode; a nonvolatile memory configured to store a favorite photo image; a display unit configured to display the favorite photo image as a digital photo frame; a display control module configured to acquire basic data of additional information, wherein additional information is at least one of clock, calendar, and weather forecast and is acquired as text of respective time information, date information and/or weather information, and wherein basic data is acquired from broadcast signals, or from a communication network when it cannot be acquired from broadcast signals; set an additional information image to represent the additional information corresponding to the basic data, according to at least one of position, size, and transparency of the additional information image; and to overlap the additional information image with the displayed digital photo frame, wherein the setting of the additional information image is achieved through a main menu screen and the setting of the additional information image is omitted when a quick menu screen is displayed such that the additional information image is displayed in accordance with previous setting results.

According to another aspect of the present invention, there is provided a TV set display method using a nonvolatile memory storing at least one favorite still image, the display method comprising: receiving broadcast signals; setting a still image display mode; storing a favourite photo image in a non-volatile memory; displaying the favourite photo image as a digital photo frame; acquiring basic data of additional information, wherein additional information is at least one of clock, calendar, and weather forecast and is acquired as text of respective time information, date information and/or weather information, and wherein basic data is acquired from broadcast signals, or from a communication network when it cannot be acquired from broadcast signals; setting an additional information image to represent the additional information corresponding to the basic data, according to at least one of position, size, and transparency of the additional information image; overlapping the additional information image with the displayed digital photo frame, wherein the setting of the additional information image is achieved through a main menu screen and the setting of the additional information image is omitted when a quick menu screen is displayed such that the additional information image is displayed in accordance with previous setting results.

### BRIEF DESCRIPTION OF THE DRAWINGS

A general configuration that implements the various feature of the invention will be described with reference to the drawings. The drawings and the associated descriptions are provided to illustrate embodiments of the invention and not to limit the scope of the invention.

Fig. 1 is a block diagram schematically illustrating a configuration of a television (TV) set according to an embodiment of the invention.

Fig. 2 is a diagram illustrating various operation keys disposed in a remote controller shown in Fig. 1.

Fig. 3 is a flowchart illustrating a command process performed by a micro processor shown in Fig. 1.

Fig. 4 is a diagram illustrating a change of a display screen obtained in the command process shown in Fig. 3.

Fig. 5 is a diagram illustrating a change of a display screen obtained when "PHOTO SELECT" is selected in a digital photo frame setting screen shown in Fig. 4.

Fig. 6 is a diagram illustrating a change of a display screen obtained when "PHOTO EDIT" is selected in a digital photo frame setting screen shown in Fig. 4.

Fig. 7 is a flowchart specifically illustrating an additional information setting process shown in Fig. 3.

Fig. 8 is a diagram illustrating a change of the display screen obtained when "ADDITIONAL INFORMATION SET" is selected in the digital photo frame setting screen shown in Fig. 4.

Fig. 9 is a flowchart specifically illustrating a digital photo frame displaying process shown in Fig. 3.

Fig. 10 is a flowchart specifically illustrating an analog clock image combining process shown in Fig. 9.

Fig. 11 is a flowchart specifically illustrating a calendar image combining process shown in Fig. 9.

Fig. 12 is a flowchart specifically illustrating a weather forecast image combining process shown in Fig. 9.

Fig. 13 is a flowchart specifically illustrating a divination image combining process shown in Fig. 9.

### DETAILED DESCRIPTION OF THE EMBODIMENTS

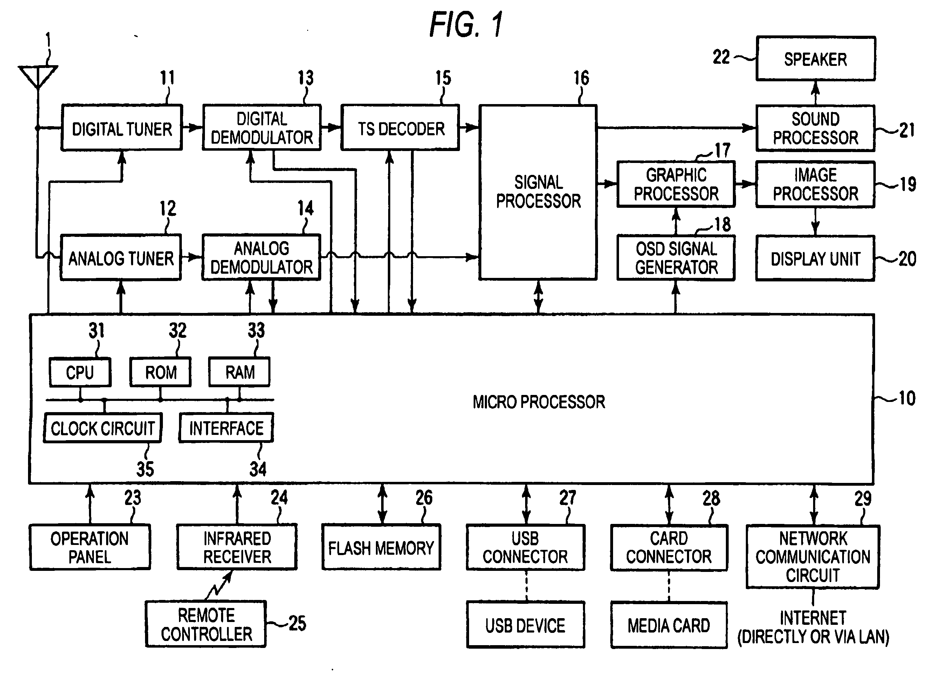

Hereinafter, a television (TV) set according to an embodiment of the invention will be described with reference to the accompanying drawings. Fig. 1 schematically shows a configuration of a television (TV) set according to an embodiment of the invention. The TV set is capable of receiving terrestrial analog broadcast signals and BS, CS, and terrestrial digital broadcast signals and includes a micro processor 10, a digital tuner 11, an analog tuner 12, a digital demodulator 13, an analog demodulator 14, and a TS decoder 15.

The BS, CS, and terrestrial digital broadcast signals are supplied as a received signal to the digital tuner 11 from an antenna 1. Similarly, the terrestrial analog broadcast signals are supplied as a received signal to the analog tuner 12 from the antenna 1. The digital tuner 11 and the analog tuner 12 employ a phase-locked loop (PLL) scheme and are used to designate reception parameters such as center frequency and bandwidth and to select desired broadcast signals under the control of the micro processor 10.

The received signals of the broadcast signals selected by the digital tuner 11, for example, in Japan, are sequentially supplied to the digital demodulator 13 and the TS decoder 15 of an OFDM (Orthogonal Frequency Division Multiplexing) system, and are demodulated and decoded into digital image signals and sound signals thereby. The received signals selected by the analog tuner 12 are supplied to the analog demodulator 14 and are demodulated into analog image signals and sound signals thereby.

The TV set further includes a signal processor 16, a graphic processor 17, an OSD (On Screen Display) signal generator 18, an image processor 19, a display unit 20, a sound processor 21, a speaker 22, an operation panel 23, an infrared receiver 24, a remote controller 25, a flash memory 26, a USB (Universal Serial Bus) connector 27, a card connector 28, and a network communication circuit 29. The signal processor 16 selectively performs various digital signal processing on the digital image signal and the digital sound signal from the TS decoder 15 and outputs the resultant signals to the graphic processor 17 and the sound processor 21, respectively. The signal processor 16 selectively digitalizes the analog image signal and the analog sound signal from the analog demodulator 14, performs various digital signal processing on the digitalized image and sound signals, and outputs the resultant signals to the graphic processor 17 and the sound processor 21, respectively.

The graphic processor 17 selectively overlaps an OSD signal generated by the OSD signal generator 18 with the digital image signal output from the signal processor 16 and outputs the resultant signal. The image processor 19 performs a conversion process such as size adjustment of adapting the digital image signal output from the graphic processor 17 to the display unit 20. The display unit 20 displays an image corresponding to the image signal output from the image processor. The sound processor 21 performs a conversion process such as the sound adjustment of adapting the digital sound signal output from the signal processor 16 to the speaker 22. The speaker 22 reproduces the sound corresponding to the sound signal output from the sound processor 21.

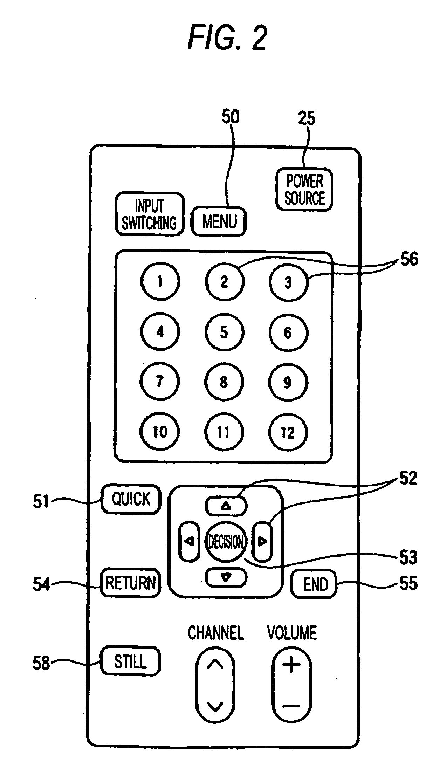

The micro processor 10 receives operation information from the operation panel 23 or operation information sent from the remote controller 25 and received by the infrared receiver 24 and controls the respective components to reflect the operation details. Here, the operation panel 23 and the remote controller 25 correspond to the operation module serving as a user interface. As shown in Fig. 2, the micro processor 10 includes a CPU (Central Processing Unit) 31 for performing a variety of processes and controls, a ROM (Read Only Memory) 32 for storing the control program of the CPU 31 and various initial data, a RAM (Random Access Memory) 33 for providing a work area for temporarily storing input and output information of the CPU 31, an interface 34 for inputting and outputting setting information and control information of the components via an I²C bus, and a clock circuit 35 which is corrected on the basis of time and date information acquired using broadcast signals and networks.

The flash memory 26 is provided as a nonvolatile memory storing at least one favorite photo image as a still image and a variety of registration information used to display the photo image as a digital photo frame. The variety of registration information includes the favorite photo image to be displayed as a digital photo frame, type information of the additional information to be added to the digital photo frame, and setting information and image subject information of the additional information. Here, the image subject information is registered in advance in the flash memory 26 at the shipping stage. The USB connector 27 is provided for connection to various USB devices. The card connector 28 is provided for connection to various media cards. The network communication circuit 29 is connected to the Internet directly or via a LAN (Local Area Network). The time information acquired from the broadcast signals is input to the micro processor 10 as the processing result of the signal received by the antenna 1. The basic data of the time information, the date information, the weather information, and the divination information acquired from the network is input to the micro process 10 as the communication result of the network communication circuit 29.

To perform a photo viewer function or a digital photo frame function, the micro processor 10 receives one or more photo images stored as a file in a USB memory connected to the USB connector 27 or a media card connected to the card connector 28, controls the signal processor 16, the graphic processor 17, and the image processor 19 to process the photo images, and controls the displaying of the photo images on the display unit 20. The digital photo frame function is embodied as an operation of the TV set performed in a digital photo frame mode as a still image display mode. In the digital photo frame mode, a user selects a favorite photo image from one or more photo images stored in the USB memory or the photo image media card, for example, by operating the remote controller 25, and the micro processor 10 registers the favorite photo image in the flash memory 26. After the registration, the micro processor 10 controls the OSD signal generator 18 and the like to display the favorite photo image as a digital photo frame on the display unit 20 and to further overlap the additional information image on the digital photo frame. Here, the micro processor 10, the signal processor 16, the graphic processor 17, the OSD signal generator 18, and the image processor 19 constitute a display control module performing a display control process of acquiring the basic data as additional information on the digital photo frame in the digital photo frame mode, combining the additional information image to display the additional information corresponding to the basic data, and overlapping the additional information image with the displayed digital photo frame on the basis of the independent settings of the additional information.

Fig. 2 shows various operation keys provided in the remote controller 25. A user can display selection items by operating a main menu key 50 or a quick menu key 51, select the selection items by operating up, down, left, and right direction keys 52, and decide the selection result by operating a decision key 53. A return key 54 is operated to return the screen and an end key 55 is operated to notify an end of an operation. Channel keys 56 are operated to cancel the selection of broadcast signals or the display of the digital photo frame.

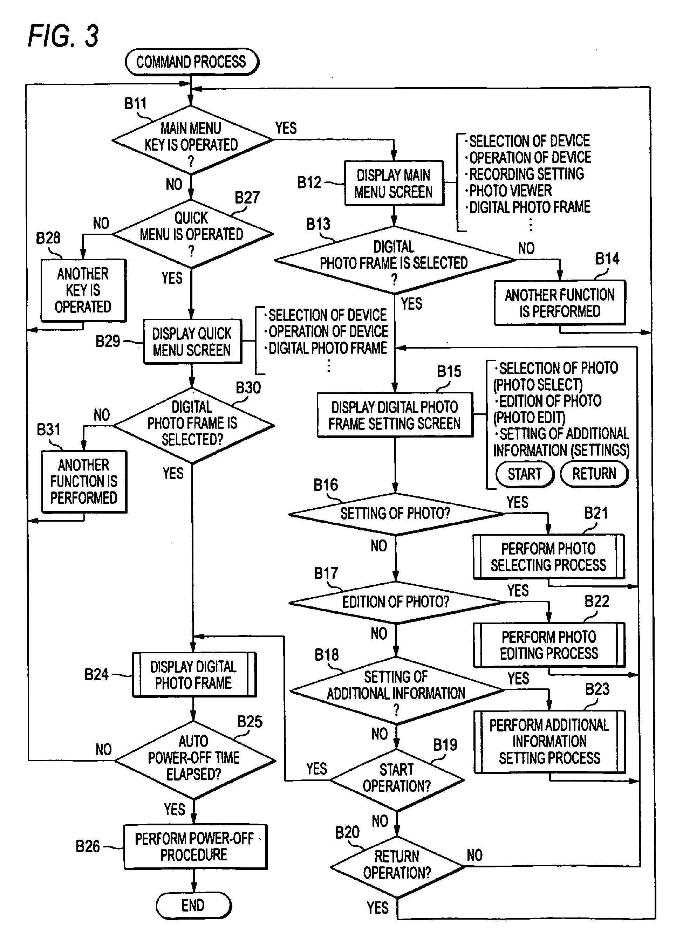

Fig. 3 shows a command process performed by the micro processor 10. This command process is performed on a command acquired as operation information at the time of operating the operation panel 23 or the remote controller 25. In the command process, it is first determined in block B11 whether the main menu key is operated. When the operation of the main menu key is detected, a main menu screen is displayed in block B12. The main menu screen includes function selecting items such as "SELECTION OF DEVICE", "OPERATION OF DEVICE", "SETTING OF RECORDING", "PHOTO VIEWER", AND "DIGITAL PHOTO FRAME." After the main menu screen is displayed, it is determined in block B13 whether "DIGITAL PHOTO FRAME" is selected. When the selection of "DIGITAL PHOTO FRAME" is not detected, another function process is performed in block B 14 and the process of block B11 is then performed again.

When the selection of "DIGITAL PHOTO FRAME" is detected, this selection is determined as setting of the digital photo frame mode and a digital photo frame setting screen is displayed in block B15. The digital photo frame setting screen includes selection items such as "PHOTO SELECTION", "PHOTO EDITING", "ADDITIONAL INFORMATION SETTING", "START", and "RETURN". The operations of selecting these items are detected in blocks B16 to B20. When the operation of selecting "PHOTO SELECTION" is detected in block B16, a photo selecting process is performed in block B21. When the operation of selecting "PHOTO EDITING" is detected in block B17, a photo editing process is performed in block B22. When the operation of selecting "ADDITIONAL INFORMATION SETTING" is detected in block B18, an additional information setting process is performed in block B23. When the processes of blocks B21 to B23 are finished, the process of block B15 is performed again. When the operation of selecting "RETURN" is detected in block B20, the process of block B11 is performed again.

When the operation of selecting "START" is detected in block B 19, the digital photo frame displaying process is performed in block B24. When the digital photo frame displaying process is finished, it is determined in block B25 whether the auto power-off time has passed. When it is detected that the auto power-off time has passed, a power-off procedure of the TV set is performed in block B26. The command process is ended after the power-off procedure is performed. On the other hand, when the passing of the auto power-off time is not detected in block B25, the process of block B11 is performed again.

When the operation of the main menu key is not detected in block B11, it is determined in block B27 whether the quick menu key is operated. When the operation of the quick menu key is not detected, another key operating process is performed in block B28 and the process of block B11 is then performed again. When the operation of the quick menu key is detected, a quick menu screen is displayed in block B29. The quick menu screen includes function selecting items such as "SELECTION OF DEVICE", "OPERATION OF DEVICE", and "DIGITAL PHOTO FRAME." After the quick menu screen is displayed, it is determined in block B30 whether "DIGITAL PHOTO FRAME" is selected. When the selection of "DIGITAL PHOTO FRAME" is not detected, another function process is performed in block B31 and the process of block B11 is performed again. When the selection of "DIGITAL PHOTO FRAME" is detected, this selection is determined as the setting of the digital photo frame mode and the digital photo frame displaying process is performed in block B24, similarly to the case where the selection of "START" in the digital photo frame setting screen is detected. When the digital photo frame displaying process is finished, it is determined in block B25 whether the auto power-off time has passed. When it is detected that the auto power-off time has passed, the power-off procedure of the TV set is performed in block B26. The command process is ended after the power-off procedure is performed. On the other hand, when the passing of the auto power-off time is not detected in block B25, the process of block B11 is performed again.

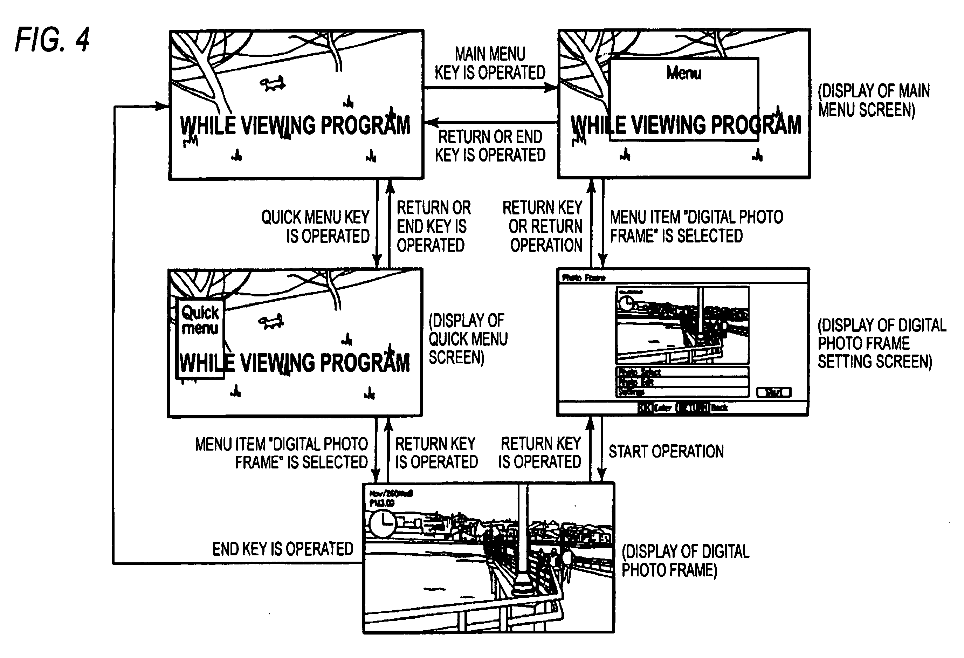

Fig. 4 shows a change of a display screen acquired in the command process shown in Fig. 3. When the main menu key is operated while viewing a broadcast program, the main menu screen is displayed on the display unit 20 to overlap with the image of the broadcast program at the center thereof. Here, when "DIGITAL PHOTO FRAME" is selected, the digital photo frame setting screen is displayed instead of the image of the broadcast program and the main menu screen. At this time, when the operation of starting the display of the digital photo frame is performed in the digital photo frame setting screen, the digital photo frame image is displayed as the setting result of the digital photo frame. In displaying the digital photo frame, the additional information image such as an analog clock is displayed to overlap with the digital photo frame of a favorite photo image. In addition, the digital photo frame occupies the overall display screen of the display unit 20.

When the quick menu key is operated, the quick menu screen is displayed on the display unit 20 to overlap with the image of the broadcast program in the vicinity of the left end. When the setting of the digital photo frame has already been completed and the operation of selecting "DIGITAL PHOTO FRAME" is performed, the display of the digital photo frame setting screen is omitted and the digital photo frame is rapidly displayed in accordance with the setting result of the digital photo frame. The display pictures can be returned to the previous pictures by operating either the return key or the end key or by performing the return operation as shown in Fig. 4. The operation of the channel number keys returns the display screen to the image display of the broadcast program.

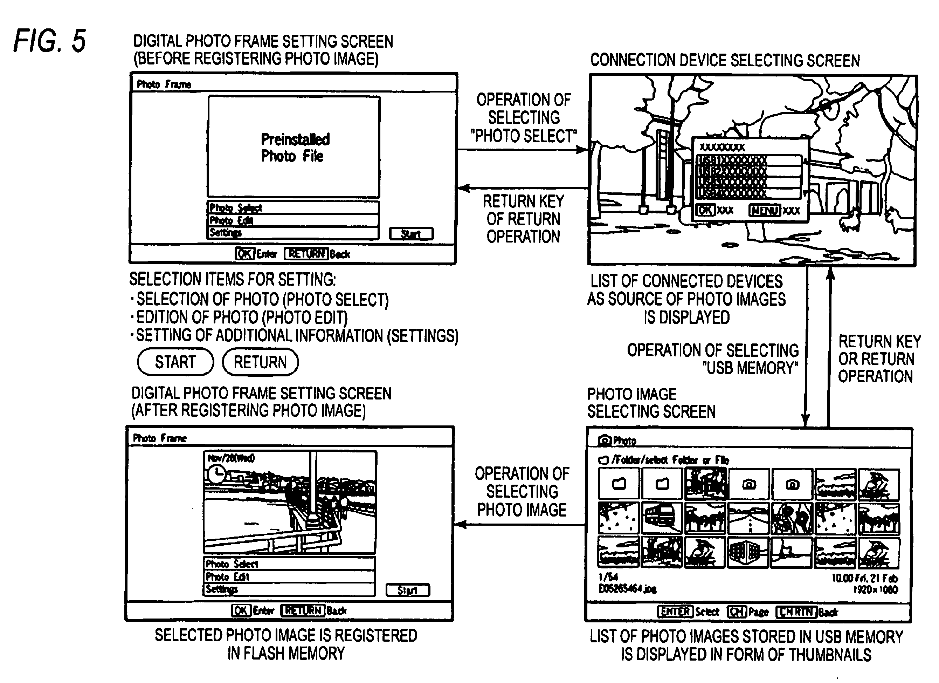

Fig. 5 shows a change of a display screen obtained when "PHOTO SELECTION" is selected in the digital photo frame setting screen shown in Fig. 4. When "PHOTO SELECTION" ("Photo Select" in the screen) is selected, the digital photo frame setting screen is changed to a connected device selecting screen for displaying a list of connected devices as a source of photo images. Here, for example, when "USB MEMORY" ("USB memory" in the screen) is selected, the connected device selecting screen is changed to a photo image selecting screen for displaying a list of photo images stored in the USB memory in the format of thumbnails. Here, when one photo image is selected, the selected photo image is registered as a favorite photo image in the flash memory 26. The connected device selecting screen or the photo image selecting screen can be returned to the previous screen by operating the return key or performing the return operation as shown in Fig. 5. The operation of the channel number keys returns the display screen to the image display of the broadcast program.

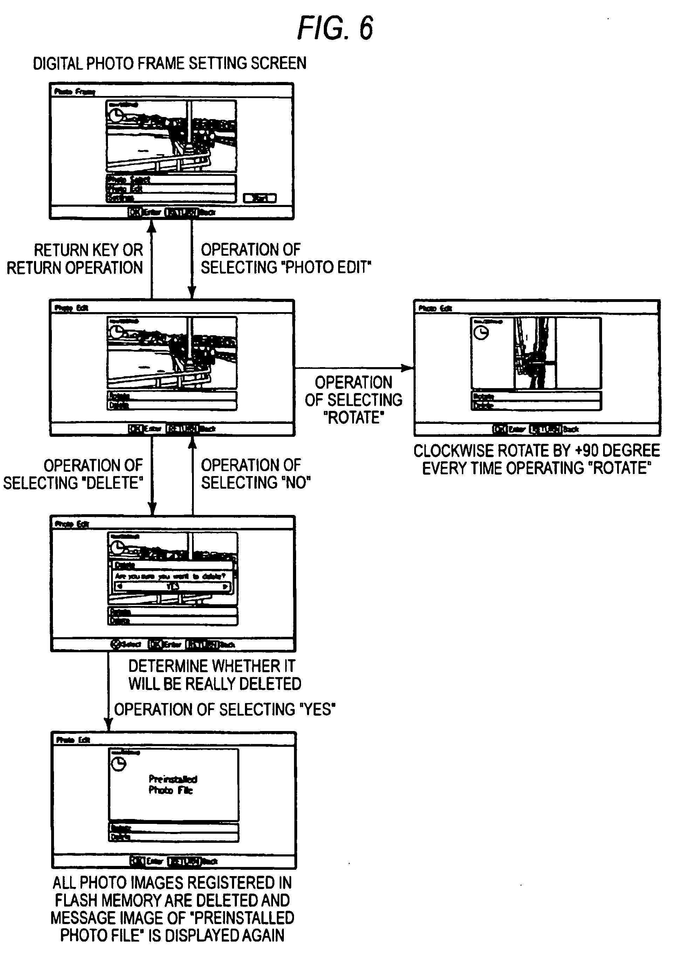

Fig. 6 shows a change of the display screen obtained when "PHOTO SELECTION" is selected in the digital photo frame setting screen shown in Fig. 4. When "PHOTO EDITING" ("Photo Edit" in the screen) is selected, a favorite photo image stored in the flash memory 26 is displayed in the digital photo frame setting screen along with editing selection items such as "ROTATION" ("Rotate" in the screen) or "DELETION" ("Delete" in the screen). For example, when "ROTATION" is selected, the photo image rotates by +90 degree whenever "ROTATION" is selected. When "DELETION" is selected, a check screen is displayed to check whether the photo image should be really deleted. When "YES" is selected in the check screen, the favorite photo image registered in the flash memory 26 is deleted and a default image including a message of "PREINSTALLED PHOTO FILE" is displayed as notification that the favorite photo image is not registered. On the other hand, when "NO" is selected, the display screen is returned to the screen for displaying the editing selection items.

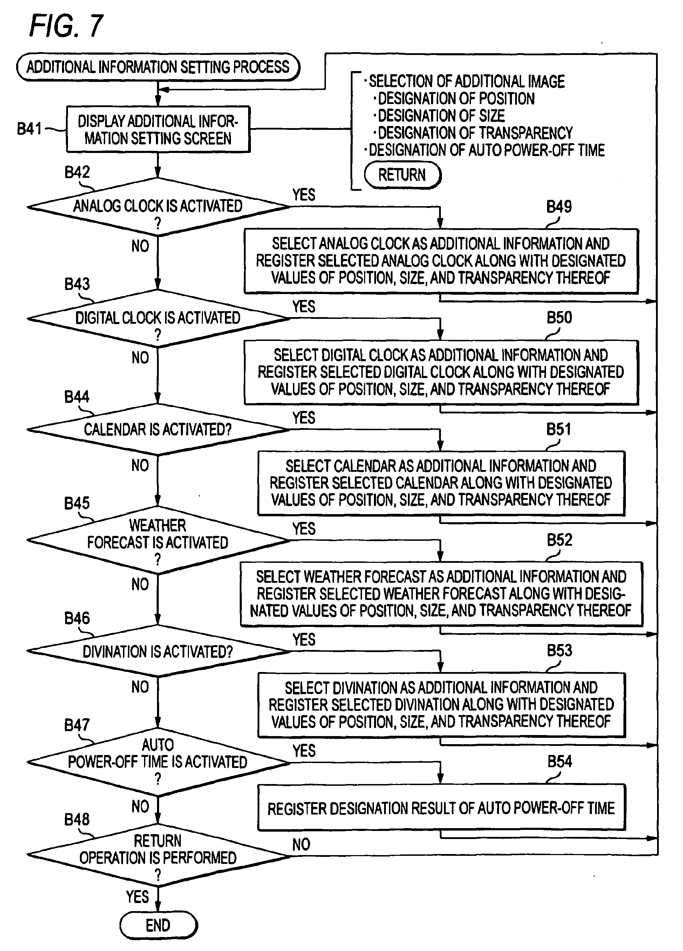

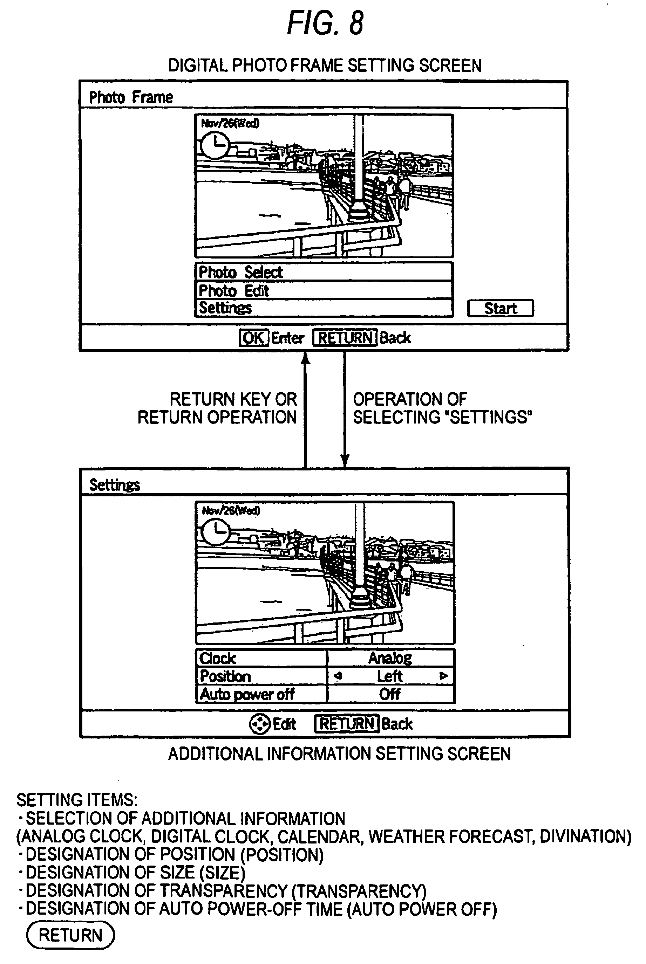

Fig. 7 specifically shows the additional information setting process shown in Fig. 3 and Fig. 8 shows a change of a display screen obtained when "ADDITIONAL INFORMATION SETTING" is selected in the digital photo frame setting screen shown in Fig. 4. In this additional information setting process, the additional information setting screen is displayed in block B41. The additional information setting screen includes selection items such as "SELECTION OF ADDITIONAL INFORMATION", "DESIGNATION OF AUTO POWER-OFF TIME", and "RETURN." In "SELECTION OF ADDITIONAL INFORMATION", one of "ANALOG CLOCK", "DIGITAL CLOCK", "CALENDAR", "WEATHER FORECAST", and "DEVINATION" is designated as the type of the additional information by operating the left and right direction keys 52 and the designated type of additional information is activated by operating the decision key 53. In addition, the additional information is deactivated by re-operating the decision key 53. "SELECTION OF ADDITIONAL INFORMATION" includes setting items such as "DESIGNATION OF POSITION", "DESIGNATION OF SIZE", and "DESIGNATION OF TRANSPARENCY." "SELECTION OF ADDITIONAL INFORMATION", "DESIGNATION OF AUTO POWER-OFF TIME", "RETURN", "DESIGNATION OF POSITION", "DESIGNATION OF SIZE", and "DESIGNATION OF TRANSPARENCY" are selected by operating the up and down direction keys 52. In "DESIGNATION OF POSITION", for example, one of "LEFT UPPER", "RIGHT UPPER", "LEFT LOWER", and "RIGHT LOWER" in the display screen can be designated by operating the left and right direction keys 52. In "DESIGNATION OF SIZE", for example, one of "LARGE", "MIDDLE", and "SMALL" can be designated by operating the left and right direction keys 52. In "DESIGNATION OF TRANSPARENCY", for example, one of "HIGH", "MIDDLE", and "LOW" can be designated by operating the left and right direction keys 52. In addition, for example, "LEFT UPPER", "MIDDLE", and "SMALL" are designated as defaults in "DESIGNATION OF POSITION", "DESIGNATION OF SIZE", and "DESIGNATION OF TRANSPARENCY", respectively, which are changed as needed. In "DESIGNATION OF AUTO POWER-OFF TIME", operating the left and right direction keys 52 switches between "HOURS" and "MINUTES" and it is possible to designate the hours, in the range of 0 to 24, and the minutes, in the range of 0 to 60, by operating the up and down direction keys 52.

After displaying the additional information setting screen, regarding "SELECTION OF ADDITIONAL INFORMATION", it is determined in blocks B42 to B46 whether "ANALOG CLOCK", "DIGITAL CLOCK", "CALENDAR", "WEATHER FORECAST", and "DIVINATION" are activated and it is determined in blocks B47 and B48 for "DESIGNATION OF AUTO POWER-OFF TIME" and "RETURN OPERATION." When it is detected in block B42 that "ANALOG CLOCK" is activated, the process of block B49 is performed. In block B49, the analog clock is the selection result (that is, type information) of the additional information and the selection result is registered in the flash memory 26 along with the designated values (that is, setting information) of position, size, and transparency of the analog clock. When it is detected in block B43 that "DIGITAL CLOCK" is activated, the process of block B50 is performed. In block B50, the digital clock is the selection result of the additional information and the selection result is registered in the flash memory 26 along with the designated values of position, size, and transparency of the digital clock. When it is detected in block B44 that "CALENDAR" is activated, the process of block B51 is performed. In block B51, the calendar is the selection result of the additional information and the selection result is registered in the flash memory 26 along with the designated values of position, size, and transparency of the calendar. When it is detected in block B45 that "WEATHER FORECAST" is activated, the process of block B52 is performed. In block B52, the weather forecast is the selection result of the additional information and the selection result is registered in the flash memory 26 along with the designated values of position, size, and transparency of the weather forecast. When it is detected in block B46 that "DIVINATION" is activated, the process of block B53 is performed. In block B53, divination is the selection result of the additional information and the selection result is registered in the flash memory 26 along with the designated values of position, size, and transparency of the divination.

When the selection of "DESIGNATION OF AUTO POWER-OFF TIME" is detected in block B47, the process of block B54 is performed. In block B54, the designation result of the auto power-off time is registered in the flash memory 26. The processes of blocks B41 to B48 are repeatedly performed until the operation of "RETURN" is detected. The additional information setting process is ended with the detection of the "RETURN" operation.

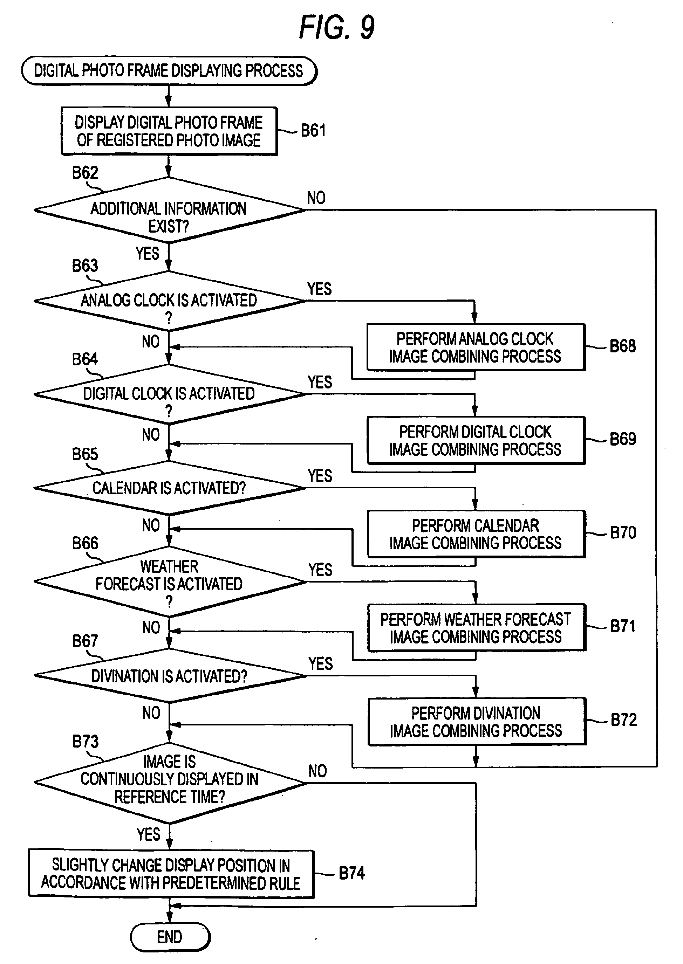

Fig. 9 specifically shows the digital photo frame displaying process shown in Fig. 3. The micro processor 10 performs the displaying process using photo reproducing components corresponding to the signal processor 16, the graphic processor 17, the OSD signal generator 18, and the image processor 19 as control targets. In the displaying process, the favorite photo image registered in the flash memory 26 is continuously displayed as a digital photo frame on the display unit 20 in block B61. In addition, when plural favorite photo images are registered in the flash memory 26, the plural favorite photo images are successively displayed as digital photo frames in the format of a slide show on the display unit 20.

In block B62, it is determined whether the additional information on the digital photo frame exists. When it is determined that the additional information exists, it is determined in blocks B63 to B67 whether "ANALOG CLOCK", "DIGITAL CLOCK", "CALENDAR", "WEATHER FORECAST", and "DEVINATION" are activated, respectively. When it is determined in block B63 that "ANALOG CLOCK" is activated, an analog clock image combining process is performed in block B68. When it is determined in block B64 that "DIGITAL CLOCK" is activated, a digital clock image combining process is performed in block B69. When it is determined in block B65 that "CALENDAR" is activated, a calendar image combining process is performed in block B70. When it is determined in block B66 that "WEATHER FORECAST" is activated, a weather forecast image combining process is performed in block B71. When it is determined in block B67 that "DEVINATION" is activated, a divination image combining process is performed in block B72.

When it is determined in block B62 that no additional information exists and when it is determined that an image combining process on all the additional information to be added to the digital photo frame is finished, it is determined whether the photo image or the additional information image is displayed over a reference time determined to prevent burn-in depending on characteristics of the display unit 20 in block B73. When it is determined that the reference time has been exceeded, the display position of the image is slightly changed in accordance with a predetermined rule in block B74. The digital photo frame displaying process is ended after the process of block B74 is performed or after it is determined in block B73 that the reference time has not been exceeded.

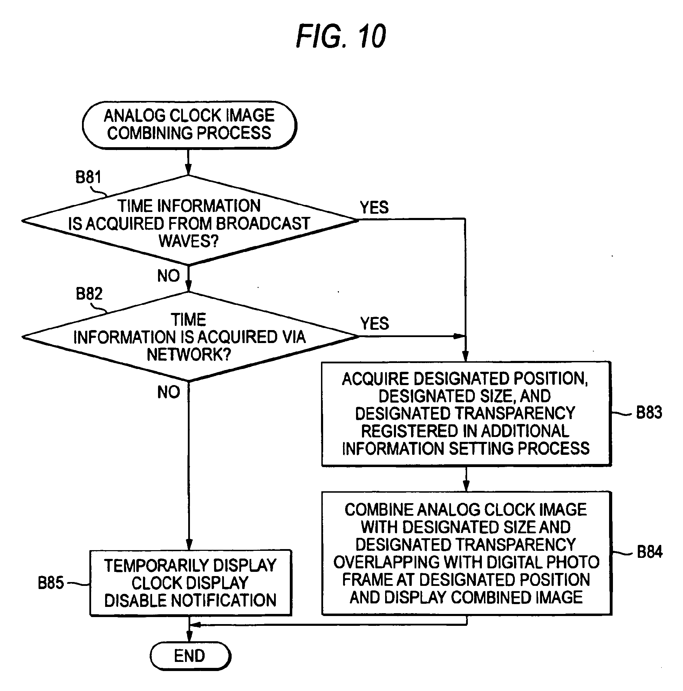

Fig. 10 specifically shows the analog clock image combining process shown in Fig. 9. In the image combining process, it is determined in block B81 whether the time information could be acquired from the broadcast signals and it is also determined in block B82 whether the time information could be acquired from the network. When it is determined in one of blocks B81 and B82 that the time information (that is, basic data as additional information) is acquired, the process of block B83 is performed. In block B83, the setting information of the designated position, the designated size, and the designated transparency registered in the additional information setting process is acquired from the flash memory 26 along with the image subject information on the analog clock. In block B84, the analog clock image with the designated size and the designated transparency overlapping at the designated position is combined with the digital photo frame and the resultant image is displayed. The analog clock image is combined from the image subject information so as to show the analog clock (additional information) corresponding to the acquired time information (hour and minute of the current time). On the other hand, when it is determined in blocks B81 and B82 that the time information could not be acquired, the process of block B85 is performed. In block B85, a message is temporarily displayed which indicates that the display of a clock is not possible. The analog clock image combining process is ended after the process of block B84 or B85 is performed. However, the digital photo frame is continuously displayed, for example, so long as the channel keys 56 of the remote controller 25 are not operated. Here, the displayed time is updated by one minute by the clock circuit 35.

The digital clock image combining process is similar to the analog clock image combining process, except that the image subject information of the analog clock is changed to the image subject information of the digital clock.

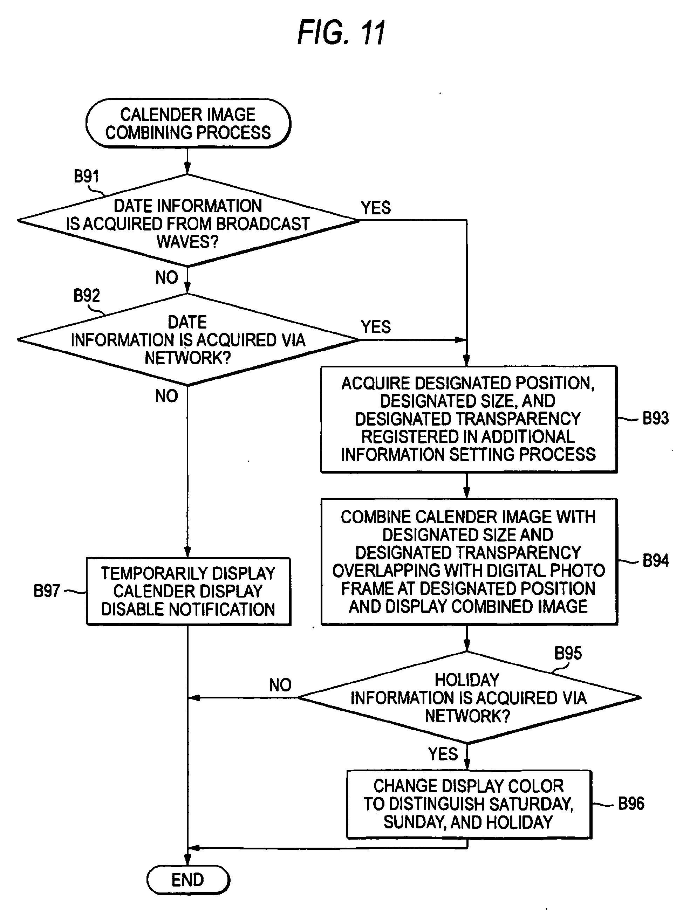

Fig. 11 specifically shows the calendar image combining process shown in Fig. 9. In the image combining process, it is determined in block B91 whether the date information could be acquired from the broadcast signals and it is also determined in block B92 whether the date information could be acquired from the network. When it is determined in one of blocks B91 and B92 that the date information (that is, basic data as additional information) is acquired, the process of block B93 is performed. In block B93, the setting information of the designated position, the designated size, and the designated transparency registered in the additional information setting process is acquired from the flash memory 26 along with the image subject information on the calendar. In block B94, the calendar image with the designated size and the designated transparency overlapping at the designated position is combined with the digital photo frame and the resultant image is displayed. The calendar image is combined from the image subject information so as to show the calendar (additional information) corresponding to the acquired date information (year, month, and day of the current date). In block B95, it is determined whether holiday information could be acquired from the network. Here, when it is determined that the holiday information could be acquired, Saturdays, Sundays, and holidays on the calendar are changed to a display color for distinguishing them from weekdays on the basis of the holiday information in block B96. On the other hand, when it is determined in blocks B91 and B92 that the date information is not acquired, the process of block B97 is performed. In block B97, a message is temporarily displayed which indicates that the display of a calendar is not possible. The calendar image combining process is ended after the process of block B96 or B97 is performed or after it is determined in block B95 that the holiday information could not be acquired. However, the digital photo frame is continuously displayed, for example, so long as the channel keys 56 of the remote controller 25 are not operated. Here, the displayed date is updated by one day by the clock circuit 35.

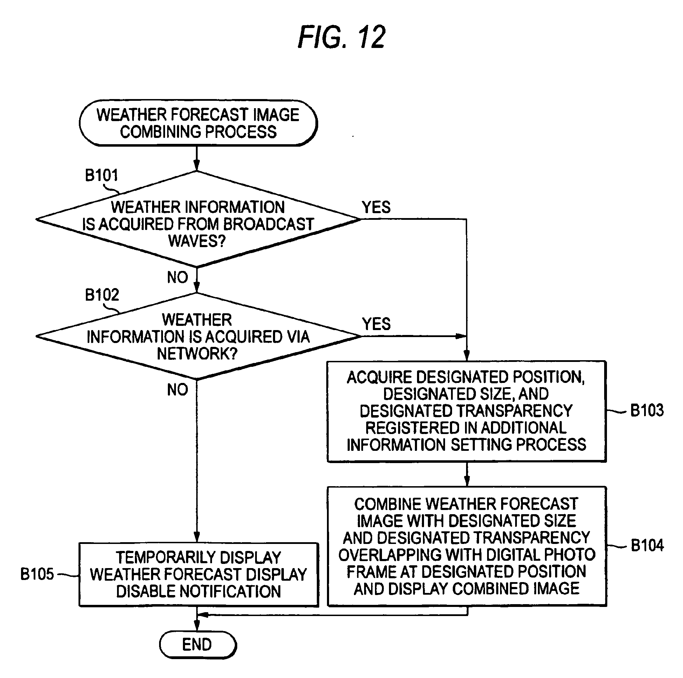

Fig. 12 specifically shows the weather forecast image combining process shown in Fig. 9. In the image combining process, it is determined in block B101 whether the weather information could be acquired from the broadcast signals and it is also determined in block B102 whether the weather information could be acquired from the network. When it is determined in one of blocks B101 and B102 that the weather information (that is, basic data as additional information) is acquired, the process of block B103 is performed. In block B103, the setting information of the designated position, the designated size, and the designated transparency registered in the additional information setting process is acquired from the flash memory 26 along with the image subject information on the weather forecast. In block B104, the weather forecast image with the designated size and the designated transparency overlapping at the designated position is combined with the digital photo frame and the resultant image is displayed. The weather forecast image is combined from the image subject information so as to show the weather forecast (additional information) corresponding to the acquired weather information. In this case, the weather forecast image may be a symbol such as clear, rainy, and cloudy. On the other hand, when it is determined in blocks B101 and B102 that the weather information could not be acquired, the process of block B105 is performed. In block B105, a message is temporarily displayed which indicates that the display of weather forecast is not possible. The weather forecast image combining process is ended after the process of block B104 or B105 is performed. However, the digital photo frame is continuously displayed, for example, so long as the channel keys 56 of the remote controller 25 are not operated.

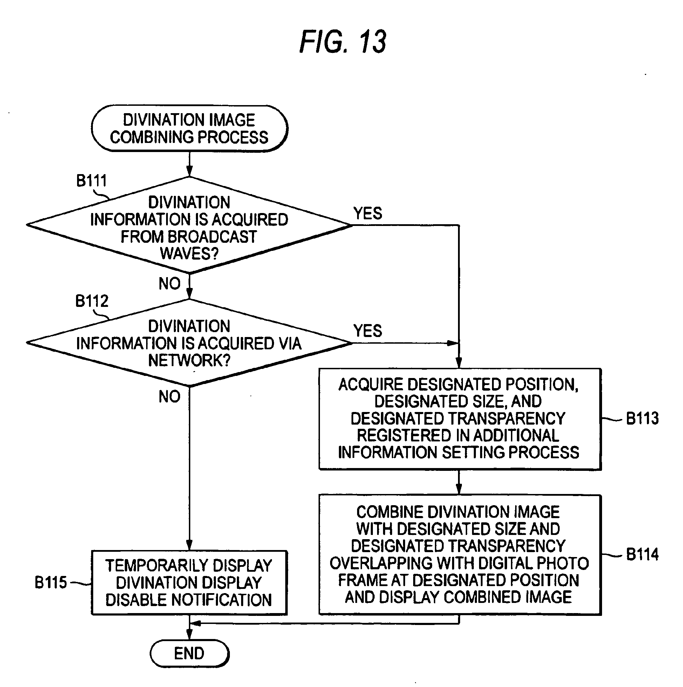

Fig. 13 specifically shows the divination image combining process shown in Fig. 9. In the image combining process, it is determined in block B111 whether the divination information could be acquired from the broadcast signals and it is also determined in block B112 whether the divination information could be acquired from the network. When it is determined in one of blocks B111 and B 112 that the divination information (that is, basic data as additional information) is acquired, the process of block B113 is performed. In block B 113, the setting information of the designated position, the designated size, and the designated transparency registered in the additional information setting process is acquired from the flash memory 26 along with the image subject information of the divination. In block B114, the divination image with the designated size and the designated transparency overlapping at the designated position is combined with the digital photo frame and the resultant image is displayed. The divination image is combined from the image subject information so as to show the divination (additional information) corresponding to the acquired divination information. In this case, the divination image may be divination symbols such as good luck, luck, and bad luck. On the other hand, when it is determined in blocks B111 and B 112 that the divination information could not be acquired, the process of block B 115 is performed. In block B 115, a message is temporarily displayed which indicates that the display of divination is not possible. The divination image combining process is ended after the process of block B 114 or B115 is performed. However, the digital photo frame is continuously displayed, for example, so long as the channel keys 56 of the remote controller 25 are not operated.

In the TV set according to the above-mentioned embodiment, it is possible to construct a display system displaying a digital photo frame. In this display system, when the digital photo frame mode is set, a favorite photo image stored in the nonvolatile memory is displayed as a digital photo frame and the image displaying process is performed by performing the independent additional information setting operation of acquiring the basic data of the additional information on the digital photo frame, combining the additional information image to represent the additional information corresponding to the basic data, and overlapping the additional information image with the displayed digital photo frame. The additional information may be, for example, clock, calendar, weather forecast, and divination and the basic data thereof can be acquired as a text of time information, date information, weather information, and divination information using broadcast signals or the Internet. In independently setting the additional information, for example, the position, size, and transparency of the additional information image can be set. When the additional information image is overlapped with the digital photo frame, the additional information image does not make the user feel the display of the digital photo frame is tiresome in spite of the delayed display of the digital photo frame, thereby improving the convenience of the digital photo frame function. Accordingly, it is possible to avoid a marked decrease in the usage frequency the digital photo frame function.

The system according to the invention is not limited to the above-mentioned embodiment, but may be modified in various forms.

In the above-mentioned embodiment, "ANALOG CLOCK", "DIGITAL CLOCK", "CALENDAR", "WEATHER FORECAST", and "DEVINATION" are selectively activated as the additional information, but the additional information may be replaced with other additional information.

The additional information image is combined and overlapped with the digital photo frame so as to indicate a combination of the types of additional information selected by the operation module such as the remote controller 25, but only predetermined single additional information may be overlapped with the digital photo frame.

In the above-mentioned embodiment, the image subject information as the additional information registered in advance in the flash memory 26 cannot be changed. However, for all additional information, the image subject information may be redundantly registered in advance and the additional information image may be combined with the image subject information arbitrarily combined by the user as a part of the additional information setting process.

In the above-mentioned embodiment, the flash memory 26 is used as the nonvolatile memory. However, for example, a hard disk connected to the TV set for recording may be used as the nonvolatile memory.

When plural favorite photo images are registered in the flash memory 26, the photo images are displayed as digital photo frames in the form of slide show. However, any one of the plural photo images registered in the flash memory 26 may be additionally specified and only the specific photo image may be displayed as the digital photo frame.

In the above-mentioned embodiment, when one or more favorite photo images are registered in the internal memory, the designation of a storage folder or a display image required for the photo viewer function can be omitted and thus the display of a digital photo frame can be rapidly started. To mute the digital photo frame display, the digital photo frame function can be used instead of the sound muting function of muting the sound of a broadcast program in the TV set.

For example, favorite music data may be stored in advance in the internal memory such as the flash memory 26 to correspond to the favorite photo images and the favorite music data may be reproduced as a BGM when displaying the favorite photo images as the digital photo frames. Accordingly, the favorite music and the favorite photo images can be simultaneously enjoyed.

Various modules of the above-mentioned system can be embodied by components of one or more computers such as a software application, a hardware and/or software module, or a server. The various modules may be separated from each other or may be distributed to all or part of basic logics or codes.

According to the display system and the display method thus described, when the still image display mode is set, a favorite still image stored in the nonvolatile memory is displayed, and the display control process is performed on the basis of the independent setting of the additional information so as to acquire basic data on the additional information of the still image, to combine the additional information image to indicate the additional information corresponding to the basic data, and to overlap the additional information image with the displayed still image. The additional information may include, for example, a clock, a calendar, a weather forecast, and divination, and the basic data thereof can be acquired as a text of time information, date information, weather information, and divination information using broadcast signals or the Internet. When independently setting the additional information, for example, the position, size, and transparency of the additional information image can be set. When the additional information image is overlapped with the favorite still image, the additional information image does not make the user feel the display of the still image is tiresome in spite of the delayed display of the still image, thereby improving the convenience of the still image displaying function. Accordingly, it is possible to avoid a marked decrease in the usage frequency of the still image displaying function.

Although the embodiment according to the present invention has been described above, the present invention is not limited to the above-mentioned embodiment but can be variously modified.

Additional advantages and modifications will readily occur to those skilled in the art. Therefore, the invention in its broader aspects is not limited to the specific details and representative embodiments shown and described herein. Accordingly, various modifications may be made without departing from the scope of the appended claims.

## Claims

1. A TV set display system comprising:
a) a broadcast signal reception module (1, 11, 12, 13, 14, 15, 16) configured to receive broadcast signals;
b) a remote controller (23, 25) configured to set a still image display mode;
c) a nonvolatile memory (26) configured to store a favorite photo image;
d) a display unit (20) configured to display the favorite photo image as a digital photo frame;
e) a display control module (10, 16, 17, 18, 19) configured to
e1) acquire basic data of additional information, wherein additional information is at least one of clock, calendar, and weather forecast and is acquired as text of respective time information, date information and/or weather information, and wherein basic data is acquired from
- broadcast signals, or
- from a communication network when it cannot be acquired from broadcast signals;
e2) set an additional information image to represent the additional information corresponding to the basic data, according to at least one of position, size, and transparency of the additional information image; and to
e3) overlap the additional information image with the displayed digital photo frame, wherein
f) the setting of the additional information image is achieved through a main menu screen and the setting of the additional information image is omitted when a quick menu screen is displayed such that the additional information image is displayed in accordance with previous setting results.

2. The system according to Claim 1, wherein the display control module (10, 16, 17, 18, 19) is configured to combine the additional information image to indicate a combination of types of additional information selected by the remote controller.

3. The system according to Claim 1, wherein the display control module (10, 16, 17, 18, 19) is configured to acquire holiday information as a part of the basic data and changes a display color of Saturdays, Sundays, and Holidays of the calendar to a display color distinguished from that of weekdays on the basis of the holiday information.

4. The system according to Claim 1, wherein the display control module (10, 16, 17, 18, 19) is configured to periodically change a display position of the still image or the additional information image.

5. A TV set display method using a nonvolatile memory storing at least one favorite still image, the display method comprising:
a) receiving broadcast signals;
b) setting a still image display mode;
c) storing a favourite photo image in a non-volatile memory;
d) displaying the favourite photo image as a digital photo frame;
e) acquiring basic data of additional information, wherein additional information is at least one of clock, calendar, and weather forecast and is acquired as text of respective time information, date information and/or weather information, and wherein basic data is acquired from
- broadcast signals, or
- from a communication network when it cannot be acquired from broadcast signals;
f) setting an additional information image to represent the additional information corresponding to the basic data, according to at least one of position, size, and transparency of the additional information image;
g) overlapping the additional information image with the displayed digital photo frame, wherein
h) the setting of the additional information image is achieved through a main menu screen and the setting of the additional information image is omitted when a quick menu screen is displayed such that the additional information image is displayed in accordance with previous setting results.

## Patentansprüche

1. Fernsehgerät-Anzeigesystem, mit:
a) einem Broadcastsignal-Empfangsmodul (1, 11, 12, 13, 14, 15, 16), konfiguriert zum Empfangen von Broadcastsignalen;
b) einer Fernbedienung (23, 25), konfiguriert zum Einstellen eines Ruhebild-Anzeigemodus;
c) einem nichtflüchtigen Speicher (26), konfiguriert zum Speichern eines bevorzugten Photobildes;
d) einer Anzeigeeinheit (20), konfiguriert zum Anzeigen des bevorzugten Photobildes als ein digitaler Photorahmen;
e) einem Anzeigesteuermodul (10, 16, 17, 18, 19), konfiguriert zum:
e1) Erfassen grundlegender Daten einer Zusatzinformation, wobei die Zusatzinformation eine Uhr, einen Kalender und/oder eine Wettervorhersage betrifft, und als Text einer Zeitinformation, einer Datumsinformation und/oder einer Wetterinformation erfasst wird, und wobei die grundlegenden Daten erfasst werden aus
- Broadcastsignalen, oder
- aus einem Kommunikationsnetz, wenn diese nicht aus den Broadcastsignalen erfasst werden könne
e2) Einstellen eines zusätzlichen Informationsbildes zum Darstellen der Zusatzinformation, die mit den grundlegenden Daten zusammenhängen, gemäß einer Position, einer Größe und/oder einer Transparenz des zusätzlichen Informationsbildes; und zum
e3) Überlappen des zusätzlichen Informationsbildes mit dem angezeigten digitalen Photorahmen, wobei
f) die Einstellung des zusätzlichen Informationsbildes über einen Hauptmenü-Bildschirm erreicht wird, und die Einstellung des zusätzlichen Informationsbildes unterlassen wird, wenn ein Schnellmenü-Bildschirm angezeigt wird, so dass das zusätzlichen Informationsbild gemäß vorhergehender Einstellresultate angezeigt wird.

2. System nach Anspruch 1, wobei das Anzeigesteuermodul (10, 16, 17, 18, 19) konfiguriert ist zum Kombinieren des zusätzlichen Informationsbildes, um eine Kombination von Arten zusätzlicher Information anzuzeigen, die über die Fernsteuerung ausgewählt wird.

3. System nach Anspruch 1, wobei das Anzeigesteuermodul (10, 16, 17, 18, 19) konfiguriert ist zum Erfassen einer Feiertaginformation, als Teil der grundlegenden Daten, und eine Anzeigefarbe von Samstagen, Sonntagen und Feiertagen des Kalenders auf eine Anzeigefarbe ändert, die sich von der von Wochentagen auf der Grundlage der Feiertagsinformation unterscheidet.

4. System nach Anspruch 1, wobei das Anzeigesteuermodul (10, 16, 17, 18, 19) konfiguriert ist zum periodischen Ändern einer Anzeigeposition des Ruhebildes oder des zusätzlichen Informationsbildes.

5. Fernsehgerät-Anzeigeverfahren, das einen nichtflüchtigen Speicher verwendet, der zumindest ein bevorzugtes Ruhebild speichert, wobei das Anzeigeverfahren umfasst:
a) Empfangen von Broadcastsignalen;
b) Einstellen eines Ruhebild-Anzeigemodus;
c) Speichern eines bevorzugten Photobildes in einem nichtflüchtigen Speicher;
d) Anzeigen des bevorzugten Photobildes als ein digitaler Photorahmen;
e) Erfassen grundlegender Daten einer Zusatzinformation, wobei die Zusatzinformation eine Uhr, einen Kalender und/oder eine Wettervorhersage betrifft, und als Text einer Zeitinformation, einer Datumsinformation und/oder einer Wetterinformation erfasst wird, und wobei die grundlegenden Daten erfasst werden aus
- Broadcastsignalen, oder
- aus einem Kommunikationsnetz, wenn diese nicht aus den Broadcastsignalen erfasst werden könne
f) Einstellen eines zusätzlichen Informationsbildes zum Darstellen der Zusatzinformation, die mit den grundlegenden Daten zusammenhängen, gemäß einer Position, einer Größe und/oder einer Transparenz des zusätzlichen Informationsbildes;
g) Überlappen des zusätzlichen Informationsbildes mit dem angezeigten digitalen Photorahmen, wobei
h) das Einstellen des zusätzlichen Informationsbildes über einen Hauptmenü-Bildschirm erreicht wird, und die Einstellung des zusätzlichen Informationsbildes unterlassen wird, wenn ein Schnellmenü-Bildschirm angezeigt wird, so dass das zusätzlichen Informationsbild gemäß vorhergehender Einstellresultate angezeigt wird.

## Revendications

1. Système d'affichage de téléviseur comprenant :
a) un module de réception de signal de diffusion (1, 11, 12, 13, 14, 15, 16) configuré pour recevoir des signaux de diffusion ;
b) une télécommande (23, 25) configurée pour établir un mode d'affichage d'image fixe ;
c) une mémoire non volatile (26) configurée pour mémoriser une image photographique favorite ;
d) une unité d'affichage (20) configurée pour afficher l'image photographique favorite en tant qu'image photographique numérique ;
e) un module de commande d'affichage (10, 16, 17, 18, 19) configuré pour
e1) acquérir des données de base d'informations supplémentaires, dans lequel les informations supplémentaires sont au moins l'un d'une horloge, d'un calendrier et de prévisions météorologiques et sont acquises en tant que texte d'informations d'heure, d'informations de date et/ou d'informations météorologiques respectives, et dans lequel les données de base sont acquises à partir
- de signaux de diffusion, ou
- d'un réseau de communication lorsqu'elles ne peuvent pas être acquises à partir de signaux de diffusion ;
e2) établir une image d'informations supplémentaires pour représenter les informations supplémentaires correspondant aux données de base, en fonction d'au moins l'une d'une position, d'une taille et d'une transparence de l'image d'informations supplémentaires ; et pour
e3) superposer l'image d'informations supplémentaires à l'image photographique numérique affichée, dans lequel
f) l'établissement de l'image d'informations supplémentaires est réalisé par l'intermédiaire d'un écran de menu principal et l'établissement de l'image d'informations supplémentaires est omis lorsqu'un écran de menu rapide est affiché de sorte que l'image d'informations supplémentaires est affichée conformément à des résultats d'établissements précédents.

2. Système selon la revendication 1, dans lequel le module de commande d'affichage (10, 16, 17, 18, 19) est configuré pour combiner l'image d'informations supplémentaires pour indiquer une combinaison de types d'informations supplémentaires sélectionnées par la télécommande.

3. Système selon la revendication 1, dans lequel le module de commande d'affichage (10, 16, 17, 18, 19) est configuré pour acquérir des informations de jour de congé en tant que partie des données de base et changer une couleur d'affichage des samedis, dimanches, et des jours de congé du calendrier en une couleur d'affichage distincte de celle des jours de la semaine sur la base des informations de jour de congé.

4. Système selon la revendication 1, dans lequel le module de commande d'affichage (10, 16, 17, 18, 19) est configuré pour changer périodiquement une position d'affichage de l'image fixe ou de l'image d'informations supplémentaires.

5. Procédé d'affichage de téléviseur utilisant une mémoire non volatile mémorisant au moins une image fixe favorite, le procédé d'affichage comprenant :
a) la réception de signaux de diffusion ;
b) l'établissement d'un mode d'affichage d'image fixe ;
c) la mémorisation d'une image photographique favorite dans une mémoire non volatile ;
d) l'affichage de l'image photographique favorite en tant qu'image photographique numérique ;
e) l'acquisition de données de base d'informations supplémentaires, dans lequel les informations supplémentaires sont au moins l'un d'une horloge, d'un calendrier et de prévisions météorologiques et sont acquises en tant que texte d'informations d'heure, d'informations de date et/ou d'informations météorologiques respectives, et dans lequel les données de base sont acquises à partir
- de signaux de diffusion, ou
- d'un réseau de communication lorsqu'elles ne peuvent pas être acquises à partir de signaux de diffusion ;
f) l'établissement d'une image d'informations supplémentaires pour représenter les informations supplémentaires correspondant aux données de base, en fonction d'au moins l'une d'une position, d'une taille et d'une transparence de l'image d'informations supplémentaires ;
g) la superposition de l'image d'informations supplémentaires à l'image photographique numérique affichée, dans lequel
h) l'établissement de l'image d'informations supplémentaires est réalisé par l'intermédiaire d'un écran de menu principal et l'établissement de l'image d'informations supplémentaires est omis lorsqu'un écran de menu rapide est affiché de sorte que l'image d'informations supplémentaires est affichés conformément à des résultats d'établissements précédents.
